# FASCICULE DE BREVET EUROPEEN

(11) **EP 0 867 596 B1**
(45) Date de publication et mention de la délivrance du brevet: **13.11.2002**
(21) Numéro de dépôt: 98420051.9
(22) Date de dépôt: 24.03.1998
(51) Int. Cl.: E21B 17/042, E21B 17/043

(54) **Joint fileté pour tubes**
Gewindeverbinder für Rohre
Threaded joint for tubes

(30) Priorité: 27.03.1997 FR 9704016
(43) Date de publication de la demande: 30.09.1998
(73) Titulaire: VALLOUREC MANNESMANN OIL & GAS FRANCE, 59620 Aulnoye-Aymeries (FR)
(72) Inventeur: Noel, Thierry, 59990 Sebourg (FR); Cacciaguerra, Bruno, 34890 St. Clement de Riviere (FR)
(74) Mandataire: Desolneux, Jean-Paul Charles

(56) Documents cités:
- EP-A- 0 488 912
- EP-A- 0 707 133
- EP-A- 0 741 261
- GB-A- 2 258 899
- US-A- 3 784 235
- US-A- 5 163 714
- US-A- 5 478 123

## Description

La présente invention est relative à un nouveau joint fileté pour tubes muni d'un dispositif contre le survissage ou le dévissage afin d'éviter les rotations indésirables et incontrôlées d'un des éléments tubulaires par rapport à l'autre après que les deux éléments tubulaires ont été réunis par le joint selon l'invention.

La plupart des joints actuellement connus tels que ceux par exemple décrits dans le brevet EP 488 912 ne sont pas munis de dispositifs contre le survissage ou dévissage et il suffit d'appliquer un couple supérieur au couple qui a servi à l'assemblage des deux éléments tubulaires pour provoquer la rotation d'un élément par rapport à l'autre, i cette rotation s'effectuant soit dans le sens d'un vissage complémentaire, soit dans le sens d'un dévissage.

Or dans certaines circonstances, il est nécessaire d'empêcher toute rotation relative d'un élément tubulaire par rapport à un autre après serrage du joint au couple désiré, un tel dévissage ou survissage pouvant en service se produire du fait des efforts et des déplacements auxquels sont soumis les tubes, efforts et déplacements qui peuvent créer des couples supérieurs aux couples d'assemblage. Un tel dévissage ou survissage peut aussi se produire du fait notamment des vibrations avec des couples appliqués qui peuvent être dans ce cas inférieurs aux couples ayant servi à l'assemblage initial.

On fait généralement appel dans ce cas à des jonctions soudées qui présentent bien entendu l'inconvénient de nécessiter un matériel de pose important, de créer des jonctions non démontables et de ne pouvoir être utilisées qu'avec des matériaux facilement soudables.

Les joints selon l'invention sont particulièrement mais non exclusivement destinés à l'industrie du pétrole et du gaz dans laquelle des tubes d'aciers sont réunis entre eux par ces dits joints pour constituer des canalisations de plus ou moins grandes longueurs et de formes variées aptes à transporter des fluides variés ou des mélanges de fluides.

Les joints selon l'invention sont dans le domaine de l'industrie du pétrole et du gaz particulièrement adaptés à la réalisation des diverses canalisations utilisées dans l'exploitation off-shore par exemple pour relier les plates-formes ou barges flottantes aux fonds marins ou pour relier un point du fond marin à un autre.

Il est capital pour obtenir des conditions d'exploitation fiables et sûres des champs pétroliers ou gazeux off-shore que les joints une fois vissés à couple contrôlé ne puissent pas être survissés ou dévissés en service de façon non contrôlée.

De façon connue et classique ces canalisations sont actuellement constituées de tubes d'acier de longueur unitaire de l'ordre par exemple de 12 m assemblés bout à bout par des jonctions soudées. Elles sont soumises à des mouvements divers du fait entre autres des vibrations, des courants marins, des vagues et des mouvements relatifs de la barge de pose par rapport aux tubes, mouvements qui engendrent des efforts et des couples qui ont tendance à faire tourner les tronçons de tubes les uns par rapport aux autres.

Ces phénomènes de mouvements relatifs des tronçons de tubes les uns par rapport aux autres peuvent survenir pendant la pose des tubes ou après la pose en phase d'exploitation.

Les joints selon l'invention sont destinés à remplacer ces jonctions soudées.

Les joints selon l'invention peuvent bien entendu être utilisés pour toute autre application dans l'industrie du pétrole et du gaz ou dans toute autre industrie par exemple la géothermie et sont particulièrement intéressants pour toute application dans laquelle on désire éviter la rotation d'un élément tubulaire par rapport à un autre après leur montage par les joints.

Ainsi le joint selon l'invention peut servir pour des tubes de cuvelage (casing) ou des tubes d'exploitation (tubing) de puits de pétrole ou de gaz.

On connaît déjà des joints filetés reliant des tubes munis de dispositifs contre le dévissage ou survissage après assemblage des tubes. Un tel joint est décrit dans le brevet US 2,318,590 pour des tiges de forage assemblées par des tools-joints et consiste à interposer, entre la surface périphérique extérieure du tube et la surface intérieure de chaque extrémité libre du manchon d'accouplement, dans un espace annulaire ouvert sur l'extérieur et prévu à cet effet, une pièce annulaire comportant des indentations vers l'intérieur et vers l'extérieur qui s'engagent dans des indentations correspondantes du tube et du manchon, pièce annulaire qui se trouve ainsi emmanchée à force.

Une telle pièce annulaire qui sert de moyen de blocage du survissage ou dévissage peut être disposée directement entre tube et manchon ou par l'intermédiaire d'une tierce pièce intermédiaire prolongeant le manchon. Le brevet US 2,318,590 décrit diverses variantes plus ou moins complexes qui consistent toutes à disposer à l'extérieur du joint ou dans un espace ouvert à l'extérieur du joint un jeu de pièces complémentaires liant mécaniquement tube et manchon.

On retrouve la même idée de base dans le brevet US 2,797,109 qui utilise comme moyen de blocage une pluralité de pièces dentées engagées dans un espace annulaire disposé à l'extrémité du joint et ouvert sur l'extérieur entre la surface extérieure d'un tube et la surface intérieure de l'autre tube, les arêtes vives des pièces dentées s'opposant au dévissage et uniquement au dévissage des tubes.

Le brevet US 2,845,106 fait appel au même principe mais cette fois l'espace annulaire ouvert à l'extrémité du joint est de forme excentrée et la pièce de blocage engagée dans cet espace et qui occupe environ 50 % de la périphérie est également excentrée.

Dans le cas du brevet US 2,845,106 et probablement du brevet US 2,797,109 il est à noter que le moyen de blocage n'évite pas de petits déplacements en rotation d'un tube par rapport à un autre, le blocage n'intervenant qu'après que ce déplacement ait eu lieu. Il n'y a pas de blocage dans la position initiale de vissage mais dans une position voisine.

Tous les dispositifs décrits dans les brevets US 2,318,590, US 2,797,109 et 2,845,106 nécessitent l'utilisation pour chaque joint d'une ou plusieurs pièces complémentaires venant s'interposer dans un logement annulaire entre tube et joint, logement de forme plus ou moins complexe dont l'usinage représente un coût complémentaire lors de la fabrication du joint. Cela oblige à gérer séparément un stock de pièces complémentaires associées aux dimensions des tubes.

De plus le logement et cette pièce complémentaire se trouvent en dehors du joint et non protégés de l'environnement extérieur notamment vis-à-vis des problèmes de corrosion. Il faut également s'assurer lors de la manutention des joints et suivant leur position que les pièces complémentaires restent en position après y avoir été introduites.

Le brevet WO 96/29533 décrit un autre type de joint pour éviter la rotation d'un tube par rapport à un autre lors de l'assemblage.

Dans ce document les deux tubes sont liés mécaniquement entre eux par emboîtement de larges dents taillées à leur extrémité respective, le montage final étant obtenu en faisant tourner jusqu'à un repère déterminé un manchon dans lequel les deux extrémités des tubes ont été engagées de façon à ce que ce manchon recouvre sur une même longueur les deux extrémités des tubes dont les filets sont de forme cylindrique. Un anneau d'étanchéité constitué d'une pièce amovible est disposé au milieu du manchon et des portées d'étanchéité sont prévues à chaque extrémité du manchon.

Cette solution est réalisée avec des filetages cylindriques et ne peut pas être appliquée à un joint de type intégral c'est-à-dire sans manchon. De plus aucun dispositif pour sécuriser le vissage du manchon, une fois celui-ci en position, n'est prévu.

La présente invention vise à créer un nouveau joint fileté pour tube muni d'un dispositif contre le survissage ou dévissage incontrôlé qui puisse notamment être utilisé à la place de jonctions soudées et qui ne présente pas les inconvénients des solutions décrites ci-dessus.

Ainsi l'invention cherche à créer un joint fileté qui ne nécessite pas la mise en oeuvre de pièces complémentaires tant pour sécuriser son vissage que pour assurer son étanchéité en service et qui reste facile à monter.

De plus l'invention cherche à créer un joint fileté qui puisse être réalisé tant dans une version manchonnée que dans une version joint intégral, et dont la structure, les fonctionnalités de base et les caractéristiques d'utilisation soient le minimum modifiées par rapport à un joint fileté ne comportant pas de dispositif contre le survissage ou le dévissage.

L'invention cherche également à créer un joint fileté muni d'un dispositif contre le survissage et dévissage qui puisse s'adapter aux différents joints filetés déjà existants et aux différents types de filetages, qu'il s'agisse de joints dits supérieurs ou premium . comportant notamment des moyens de contrôle de l'assemblage du type butée de vissage et des portées d'étanchéité ou de joints standards du type joints API.

L'invention cherche aussi à créer un joint fileté qui tout en étant muni du dispositif contre le survissage et le dévissage puisse être démonté sans difficulté et sans que ledit dispositif ne détériore ou ne laisse des empreintes dommageables sur la surface intérieure ou extérieure des tubes ou manchons.

L'invention cherche aussi à créer un joint fileté qui ne fasse appel au maximum qu'à des usinages complémentaires les plus simples possibles.

L'invention cherche encore à réaliser un joint fileté qui soit étanche vis-à-vis du milieu extérieur et qui si nécessaire puisse recevoir un revêtement externe pour le protéger contre la corrosion, notamment en milieu marin.

Le joint tubulaire fileté suivant l'invention comporte un composant tubulaire mâle muni d'un filetage extérieur mâle, un composant tubulaire femelle muni d'un filetage intérieur femelle qui correspond au filetage extérieur mâle du composant mâle et des moyens permettant d'assembler ces deux composants selon un couple de serrage déterminé, le composant mâle étant vissé à l'intérieur du composant femelle à un couple déterminé.

Le composant femelle comporte au-delà de l'extrémité aval de son filetage une portion femelle non filetée qui est munie en extrémité sur sa paroi intérieure d'une surface de portée femelle.

Le composant mâle comporte en deçà de l'extrémité amont de son filetage une portion mâle non filetée qui correspond à la portion femelle, cette portion mâle étant munie en extrémité sur sa paroi extérieure d'une surface de portée mâle qui correspond à la surface de portée femelle et qui est en contact d'appui sur la surface de portée femelle lorsque les composants mâle et femelle du joint sont en position vissée.

Les termes aval et amont sont utilisés comme expliqué ci-après : pour un composant mâle ou femelle, l'aval est orienté selon l'axe du composant vers l'extrémité libre du composant alors que l'amont est orienté vers l'intérieur du composant.

La surface intérieure de la portion femelle non filetée, ladite portion femelle non filetée étant appelée ci-après pour simplifier « la portion femelle », allant de l'extrémité aval du filetage femelle à la surface de portée femelle et la surface extérieure de la portion mâle non filetée, ladite portion mâle non filetée étant appelée ci-après pour simplifier « la portion mâle », allant de l'extrémité amont du filetage mâle à la surface de portée mâle, sont séparées radialement l'une de l'autre et créent entre portion femelle et portion mâle une zone annulaire sans contact.

Cette zone annulaire est telle que sur au moins une partie de sa longueur mesurée parallèlement à l'axe commun des composants il existe un espace annulaire calibré dans lequel une colle remplissant tout ou partie de cet espace annulaire assure une liaison mécanique entre la portion femelle et la portion mâle.

Par espace annulaire calibré on entend un volume délimité par la surface intérieure de la portion femelle et la surface extérieure de la portion mâle, ces deux surfaces étant en vis-à-vis. Ces deux surfaces sont séparées en leurs différents points par une distance radiale de quelques dixièmes de millimètres, distance radiale préférentiellement sensiblement constante sur la longueur de l'espace annulaire. La surface extérieure de la portion mâle et la surface intérieure de la portion femelle sont préférentiellement cylindriques ou coniques, ou plus généralement de révolution.

Ladite distance radiale sera choisie essentiellement en fonction du diamètre et de l'épaisseur des composants mâle et femelle et des caractéristiques de la colle utilisée de façon à pouvoir mettre en place une quantité de colle permettant d'assurer la liaison mécanique des deux composants.

On peut citer à titre de valeurs non limitatives une distance radiale comprise entre 0,15 mm et 1,0 mm. De façon générale les distances radiales devront être telles qu'elles permettent d'assurer l'efficacité du collage dans de bonnes conditions.

La zone annulaire et en particulier l'espace annulaire calibré peuvent être disposés uniquement sur la portion mâle ou la portion femelle, c'est-à-dire réalisés sur un seul des deux composants du joint.

De préférence ils seront disposés à cheval sur la portion mâle et la portion femelle c'est-à-dire réalisés à la fois sur le composant mâle et sur le composant femelle du joint.

Avantageusement la zone annulaire comportera une partie annulaire disposée directement en prolongement du filetage, de section plusieurs fois supérieure à la section de l'espace annulaire calibré, partie annulaire occupant une fraction de la longueur axiale de la zone annulaire. Cette partie annulaire est destinée à servir de réceptacle pour la graisse ou un corps équivalent susceptible d'être éjecté des filetages mâle et femelle en cours de vissage, ces filetages étant en général lubrifiés par de la graisse ou un corps équivalent, ainsi qu'à recueillir un excès de colle non utilisée dans l'espace annulaire calibré, colle et graisse pouvant se mélanger dans cette partie annulaire.

Pour simplifier on désignera par la suite cette partie annulaire par poche à graisse bien que comme expliqué ce réceptacle ne serve pas que pour la graisse.

De la sorte se succéderont dans la zone annulaire préférentiellement à partir de l'extrémité des filetages mâle et femelle une poche à graisse puis jusqu'aux surfaces de portée mâle et femelle un espace annulaire calibré.

De la sorte cette disposition permettra d'éviter que de la graisse sous pression éjectée lors du vissage vienne s'engager dans l'espace annulaire calibré et perturber l'encollage des portions mâle et femelle. Cela permettra aussi de décomprimer la graisse sous pression qui est susceptible d'être éjectée lors du vissage et d'éviter ainsi de créer des zones de contrainte dans cette partie du joint.

Cette poche à graisse ayant une hauteur radiale pouvant atteindre de l'ordre de 1 à plusieurs mm sera disposée de préférence en majeure partie sur la portion femelle de façon à ne pas affaiblir l'efficacité du joint, c'est-à-dire la section utile du composant mâle au droit de la portion mâle.

On veillera bien entendu à donner toujours à l'espace annulaire calibré une longueur suffisante pour assurer des conditions de collage satisfaisantes.

Très avantageusement la portion mâle de même que la portion femelle et en particulier la surface de portée femelle disposée à l'extrémité aval de la portion femelle auront une géométrie telle que la surface intérieure de la portion femelle et en particulier la surface de portée femelle et la surface extérieure de la portion mâle ne soient pas en contact pendant la phase de vissage du joint, la surface de portée femelle venant en contact d'appui sur la surface de portée mâle en fin de vissage du joint.

Le contact d'appui des surfaces de portée mâle et femelle est obtenu par déformation élastique et crée ainsi une étanchéité métal-métal au niveau des surfaces de portée mâle et femelle.

La portée femelle et la portée mâle auront donc une forme telle qu'il existe à l'état vissé du joint une interférence entre les dimensions radiales respectives de ces portées, cette interférence créant un effet frettant.

De la sorte lors du vissage du joint la portion femelle et en particulier la surface de portée femelle ne seront jamais en frottement avec la portion mâle et il existera pendant la phase de vissage en tout point en particulier au niveau de l'espace annulaire calibré un intervalle radial de passage libre entre la portion mâle et la portée femelle. Ceci permet un montage facile du joint et évite aussi des frottements inutiles et la détérioration en particulier des surfaces de portée.

Préférentiellement on donnera aux portées mâle et femelle la forme d'un tronc de cône dont le sommet est disposé vers l'aval du composant mâle.

Avantageusement le demi-angle au sommet pourra être compris entre 3 et 10° la longueur des portées selon l'axe du joint étant avantageusement de l'ordre de 3 à 10 mm.

Bien entendu la colle utilisée sera une colle ayant des caractéristiques la rendant apte à sa mise en oeuvre lors du vissage du joint et à son usage dans les conditions de service du joint.

Parmi les colles possibles on choisira avantageusement dans les colles pour métaux une colle résistant au choc, gardant en service une capacité de déformation élastique et de résistance au cisaillement et dont les propriétés sont au minimum modifiées en présence de graisse, colle qui pourra avoir aussi un certain effet lubrifiant.

De préférence la colle utilisée sera une colle à prise commandée par exemple par une opération de chauffage et préférentiellement également à prise rapide. Ceci permet d'assurer le montage du joint de manière contrôlée dans des temps courts et ainsi d'avoir une bonne productivité sur le chantier de pose des tubes ou en atelier.

On pourra utiliser une colle du type monocomposant dont le durcissement est commandé par exemple par une opération de chauffage. Il est aussi possible d'utiliser une colle bi-composants, pour laquelle le mélange par exemple entre résine epoxy et durcisseur se fait juste avant utilisation, le durcissement étant commandé par exemple par une opération de chauffage.

A titre d'exemple une colle à base de résine epoxy à durcissement par effet thermique pourra très bien être mise en oeuvre.

La colle est avantageusement mise en place dans l'espace annulaire calibré qui lui est réservé avant vissage du composant mâle dans le composant femelle.

Pour cela on enduira de colle, par exemple au pinceau ou par tout moyen connu, la partie du composant mâle correspondant à l'espace annulaire calibré et on vissera le composant femelle sur le composant mâle jusqu'à sa position finale. L'extrémité aval de la portion femelle viendra au niveau de la portée femelle racler l'excédent de colle, excédent qui sera rejeté à l'extérieur coté amont de la portion mâle, la portée femelle ne s'appuyant pas sur la portion mâle pendant le vissage mais uniquement en fin de vissage, l'appui se faisant au niveau de la portée mâle. De la sorte on obtient une couche annulaire de colle calibrée dans l'espace annulaire calibré, colle qui assure par ses propriétés de collage le blocage à un couple déterminé de la paroi interne de l'espace annulaire calibré par rapport à la paroi externe dudit espace donc le blocage du composant mâle par rapport au composant femelle.

En variante la colle peut être introduite lorsque le composant mâle a été vissé complètement dans sa position d'assemblage dans le composant femelle.

Dans ce cas on prévoira sur la portion femelle, au niveau de l'espace annulaire calibré au moins un canal d'injection et avantageusement un canal d'évent, le canal d'injection permettant l'introduction par exemple par injection sous pression ou par tout autre moyen en soi connu de la quantité nécessaire de colle dans l'espace annulaire calibré, le canal ou les canaux d'injection et le canal d'évent s'il existe étant après usage préférentiellement fermés par un moyen apte à assurer en soi l'étanchéité tel que par exemple un bouchon fileté avec ou sans siège d'étanchéité ou tout moyen apte à l'effet recherché.

Le joint fileté selon l'invention peut être du type intégral ou du type manchonné.

Dans le cas d'un joint du type intégral chacun des tubes à assembler comporte à une de ses extrémités, éventuellement rétreinte en diamètre et/ou d'épaisseur renforcée, un composant mâle tel que décrit ci-dessus et à son autre extrémité, éventuellement expansée en diamètre et/ou d'épaisseur de paroi renforcée, un composant femelle tel que décrit ci-dessus le joint selon l'invention étant réalisé par vissage d'un composant mâle et d'un composant femelle provenant de deux tubes à assembler, le collage étant réalisé comme expliqué ci-dessus.

Dans le cas d'un joint du type manchonné les tubes à assembler comportent tous à leurs extrémités le même type de composant, en général un composant mâle, deux composants provenant de deux tubes à mettre bout à bout venant se visser dans les deux composants correspondants, en général des composants femelles, disposés aux deux extrémités d'un manchon de liaison, les composants mâles et femelles étant réalisés tel que cela a déjà été décrit.

Les moyens permettant d'assembler le composant mâle dans le composant femelle selon un couple de serrage déterminé peuvent être des moyens constitués par les filetages eux-mêmes ou des moyens indépendants des filetages ou encore une combinaison de moyens constitués par les filetages et des moyens non liés aux filetages.

Ainsi dans le cas de filetages cylindriques standards, par exemple selon profils API, donc non frettants, ces moyens seront indépendants des filetages. Il pourra s'agir de moyens connus tels que des butées d'assemblage ou des portées frettantes, comme par exemple les surfaces de portée des portions mâle et femelle si celles-ci procurent un couple résistant au vissage suffisant, assurant un contact métal-métal avec couple résistant suffisant entre composant mâle et composant femelle dans une zone autre que les filetages.

Dans le cas de filetages coniques, donc frettants, ces moyens sont constitués directement par ces filetages et en particulier par l'interférence entre composant mâle et composant femelle au niveau des filetages.

Mais ces moyens peuvent être complétés dans le cas de filetages coniques par des moyens indépendants des filetages tel que des butées de vissage et/ou des portées frettantes assurant un contact métal-métal entre composant mâle et composant femelle ces butées et/ou portées métal-métal pouvant en soit assurer d'autres fonctions que le serrage selon un couple déterminé.

Les filetages utilisables pour le joint de l'invention peuvent être de tout type comme par exemple cylindrique, conique, à un seul ou plusieurs étages, à angle négatif.

Avantageusement, en particulier quand le joint de l'invention est destiné aux applications du pétrole et du gaz et particulièrement pour la réalisation de canalisations off-shore, on munira le composant mâle et le composant femelle du joint de portées métal-métal assurant une étanchéité complémentaire du joint notamment vis-à-vis du fluide circulant à l'intérieur. Ces joints pourront aussi avantageusement comporter des butées de vissage.

Ainsi le joint selon l'invention pourra être réalisé en particulier en utilisant les joints filetés qui sont déjà décrits dans les brevets ou demandes de brevets européens EP 0488912, EP 0741261, EP 0707133.

L'invention sera maintenant décrite sans que cela ait aucun caractère limitatif à l'aide d'exemples de réalisation et des figures correspondantes.

La figure 1 représente en coupe selon son axe et fortement agrandi un joint selon l'invention à l'état monté, seule la partie située au-dessus de l'axe étant représentée.

La figure 2 représente toujours en coupe selon l'axe du joint le composant femelle du joint selon la figure 1, seule la partie située au-dessus de l'axe étant représentée.

La figure 3 représente toujours en coupe selon l'axe du joint le composant mâle du joint selon la figure 1, seule la partie située au dessus de l'axe étant représentée.

La figure 4 représente en coupe selon l'axe du joint, seule la partie située au-dessus de l'axe étant représentée, une variante manchonnée du joint de la figure 1.

La figure 5 représente en coupe selon l'axe du joint, seule la partie située au-dessus de l'axe étant représentée, de façon très agrandie par rapport à la figure 3, la préparation avant vissage de la zone du composant mâle en amont de son filetage.

La figure 6 représente en coupe selon l'axe du joint, seule la partie située au-dessus de l'axe étant représentée, de façon très agrandie par rapport à la figure 2, la zone du composant femelle située en aval de son filetage avant vissage.

La figure 7 représente en coupe selon l'axe du joint, seule la partie située au-dessus de l'axe étant représentée, de façon très agrandie, les composants mâle et femelle en cours de vissage en amont du filetage mâle.

La figure 8 représente en coupe selon l'axe du joint, seule la partie située au-dessus de l'axe étant représentée, de façon très agrandie, les composants mâle et femelle en fin de vissage en amont du filetage mâle.

La figure 9 représente toujours selon l'invention une variante du joint de la figure 1.

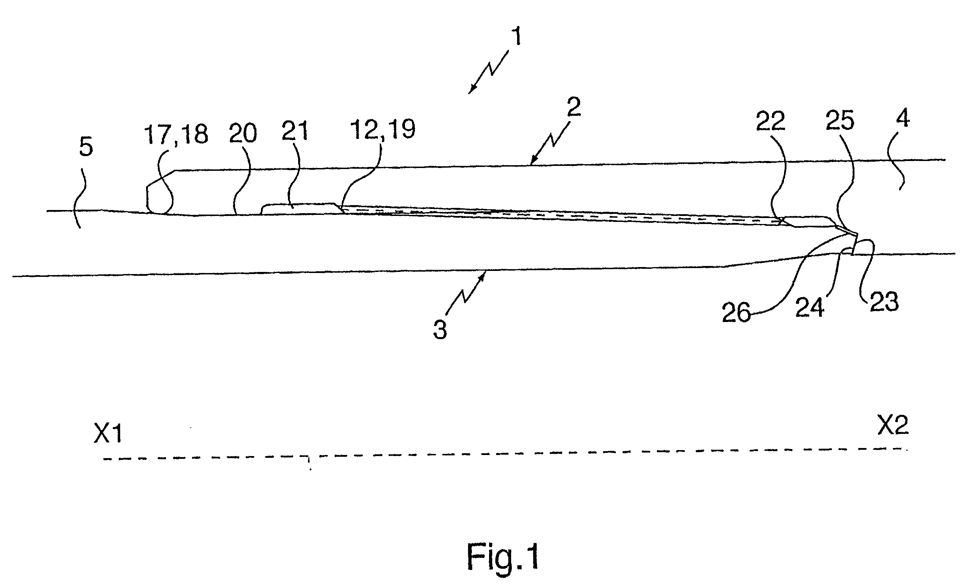

La figure 1 représente en coupe selon son axe et fortement agrandi un joint assemblé selon l'invention.

Seule la partie située au-dessus de l'axe X1-X2 du joint est représentée, l'axe X1-X2 étant par simplification porté dans le plan de la figure alors que du fait de l'échelle de représentation utilisée il ne serait pas nécessairement représentable sur la feuille de la figure.

On voit sur cette figure un joint 1 comportant un composant femelle 2 et un composant mâle 3 vissés l'un sur l'autre.

Le composant femelle 2 est disposé à l'extrémité du tube 4 et le composant mâle 3 est disposé à l'extrémité du tube 5, les deux tubes 4 et 5 étant ainsi assemblés par le joint selon l'invention.

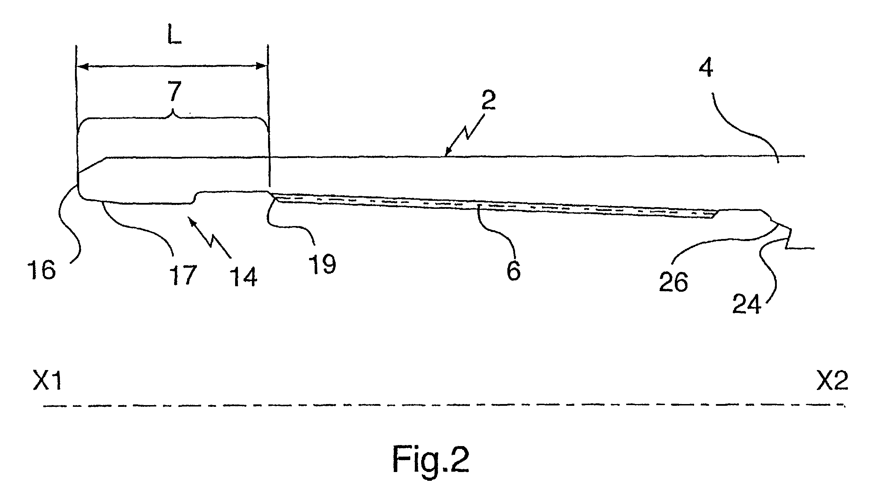

Le composant femelle 2 comporte un filetage femelle intérieur 6 (figure 2).

Ce filetage 6 est conique, sa pente par rapport à l'axe X1-X2 étant de l'ordre de 2,5 % à 7,5 % et il est équipé de filets classiques trapézoïdaux.

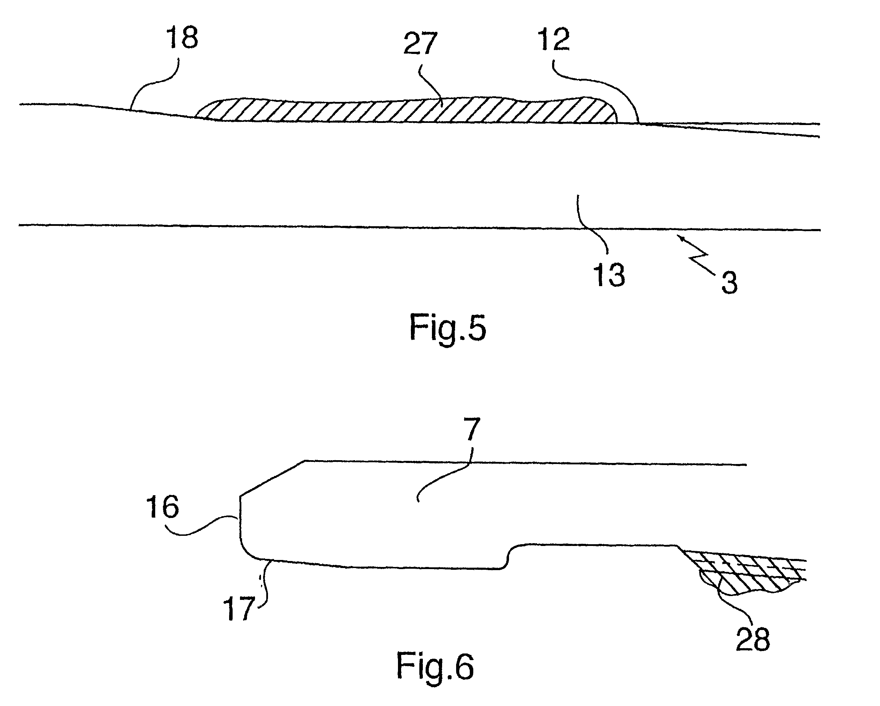

En aval du filetage 6 le composant femelle 2 est prolongé par une portion femelle 7 qu'on voit aussi sur la figure 6.

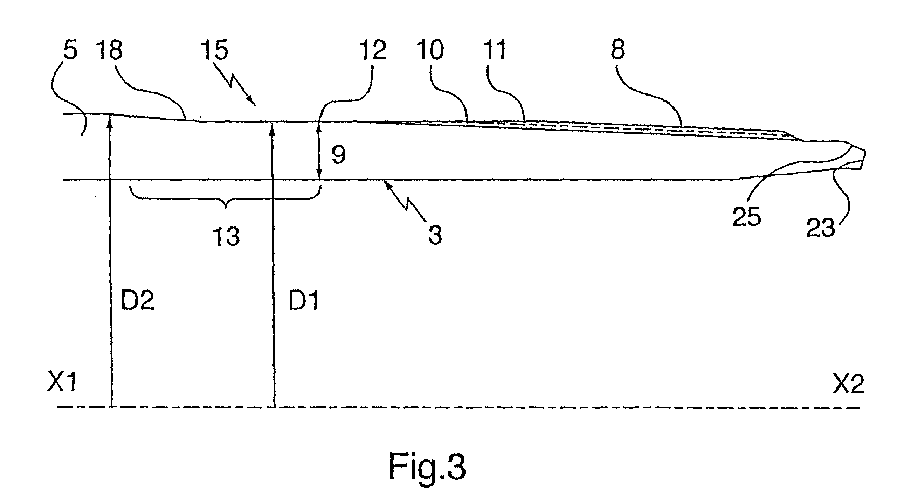

Le composant mâle 3 (figure 3) comporte un filetage extérieur 8. Ce filetage 8 est également conique et correspond au filetage femelle 6 du composant femelle 2.

Afin de disposer d'une section utile 9 du composant mâle 3 la plus grande possible au point 12 correspondant à l'extrémité amont du filetage 8 les filets mâles sont évanouissants à partir du point 11, point où l'enveloppe des sommets des filets du filetage 8 dans sa partie courante rejoint la surface courante extérieure du composant 3.

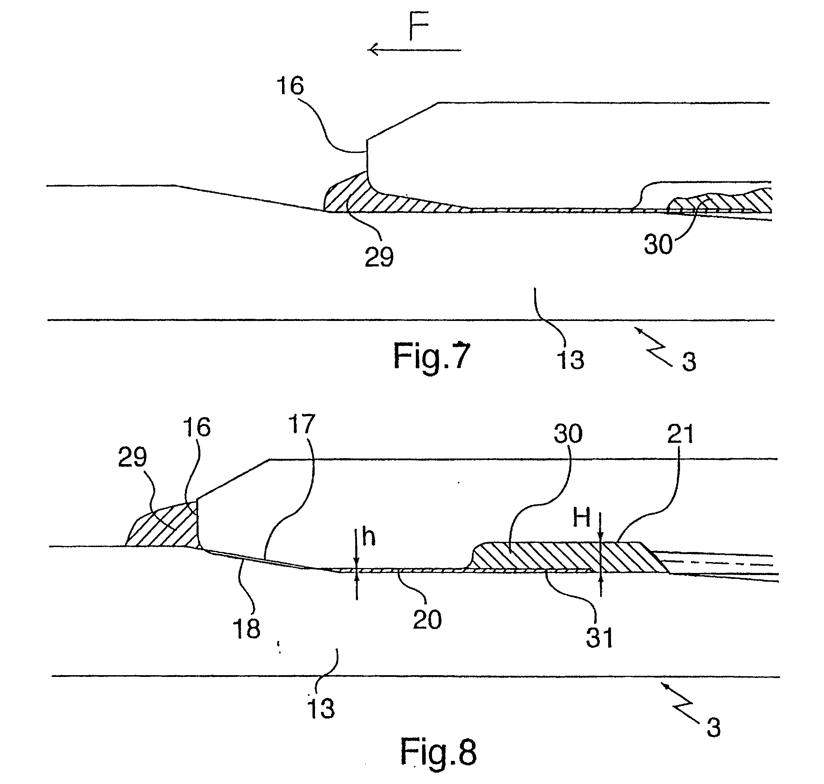

En amont de l'extrémité 12 du filetage le composant mâle 3 est prolongé par une portion mâle 13 qu'on voit aussi sur la figure 8.

A l'extrémité aval 16 de la portion femelle 7 sur la surface intérieure 14 est disposée en 17 une surface de portée femelle. Sur la surface extérieure 15 de la portion mâle 13 en extrémité amont de cette portion et correspondant à la surface de portée femelle est disposée en 18 une surface de portée mâle.

Ces deux surfaces annulaires 17, 18 et la géométrie des portions mâle 13 et femelle 7 sont telles que à l'état assemblé vissé les deux surfaces annulaires 17, 18 sont en contact d'appui métal-métal, créant par là une certaine étanchéité du joint fileté vis-à-vis du fluide extérieur aux tubes 4 et 5.

La surface intérieure 14 de la portion femelle 7 entre la surface de portée 17 et l'extrémité aval 19 du filetage 6 et la surface extérieure 15 de la portion mâle 13 entre la surface de portée 18 et l'extrémité amont 12 du filetage 8 créent, lorsque le composant mâle 3 est vissé en position assemblée dans le composant femelle 2, une zone annulaire comprenant successivement à partir des surfaces de portée 17, 18 :
- un espace annulaire calibré 20 (figure 8),
- un réceptacle annulaire 21 appelée pour simplifier poche à graisse, étant bien entendu que cette désignation ne caractérise qu'une partie de ses fonctions.

Les surfaces intérieure 14 et extérieure 15 sont en 20 et 21 radialement distantes l'une de l'autre et n'ont aucun point d'appui l'une sur l'autre.

L'espace annulaire calibré 20 (voir figure 8) est ici constitué par deux surfaces annulaires cylindriques respectivement réalisées sur la surface intérieure 14 et la surface extérieure 15 radialement distantes d'une valeur «h» de quelques 1/10 de mm, cet espace occupant dans le cas du présent exemple et sans que cela ne soit nullement limitatif environ 50 % de la longueur mesurée selon l'axe X1-X2 entre les surfaces de portée 17, 18 et les extrémités 12, 19 des filetages.

La poche à graisse 21 est ici aussi réalisée par l'intervalle radial existant entre deux surfaces cylindriques, surfaces distantes d'une valeur «H», H étant d'un ordre de grandeur de 1 à plusieurs mm. A titre d'exemple, H peut être égal à 6 à 30 fois h.

A l'état vissé assemblé la portion femelle 7 s'appuie donc uniquement sur la surface de portée mâle 18 par l'intermédiaire de sa surface de portée femelle 17. La longueur « L » de la portion femelle 7 est de l'ordre de 15 à 40 % de la longueur axiale hors portion femelle du composant femelle. Cette configuration en poutre avec point d'appui améliore le comportement à la flexion du joint et la résistance à la fatigue en flexion du joint, du fait de la diminution des pressions de contact entre composant mâle et composant femelle au niveau des filetages et des contraintes de flexion au niveau des extrémités 12, 19 des filetages par rapport à un joint ne comportant pas de portion mâle 13 et femelle 7 avec extrémité 16 en appui sur le composant mâle.

De façon préférentielle et tel est le cas des joints représentés sur les figures 1 à 9 on donnera à la portion mâle 13 et à la portion femelle 7 une géométrie et des dimensions telles que pendant le vissage du joint 1 la surface intérieure 14 de la portion femelle 7, ne frotte ou ne s'appuie en aucun point et en particulier pas au niveau de la surface de portée femelle 17 sur la surface extérieure 15 de la portion mâle 13. De la sorte on facilite le montage du joint et on évite la détérioration notamment des surfaces de l'espace annulaire calibré 20 et de la surface de portée femelle 17.

Ce n'est qu'en fin de vissage lorsque les composants mâle 3 et femelle 2 approchent de leur position finale que la surface de portée femelle 17 vient frotter sur la surface de portée mâle 18, cette portée mâle étant conçue pour provoquer alors une déformation élastique dans la zone de l'extrémité aval 16 du composant femelle, le contact métal-métal 17-18 étant alors frettant. De ce fait, la distance radiale séparant les deux surfaces de l'espace calibré 20 est légèrement augmentée en fin de vissage par rapport à la distance radiale existant en cours de vissage, cette distance radiale atteignant alors la valeur h.

Ces portées 17, 18 sont ici tronconiques leur pente étant de 5 % par rapport à l'axe commun X1-X2 du joint 1.

Ce montage est visible à échelle agrandie sur la figure 8 où on a volontairement représenté au niveau des portées 17 et 18 l'interférence diamétrale en représentant lesdites portées avant leurs déformations élastiques, l'intervalle radial entre les deux portées représentant l'interférence.

Ainsi on voit qu'en fin de vissage la largeur radiale h de l'espace annulaire 20 est légèrement augmentée quand les deux surfaces de portée 17, 18 viennent en contact d'appui.

Pour réaliser un tel montage il faut que le diamètre extérieur D1 de la portion mâle 13 soit inférieur au diamètre courant D2 du tube 5 sur lequel est réalisé le composant mâle 3. Pour réduire aussi peu que possible l'efficacité du joint donc l'épaisseur du tube au niveau du composant mâle 3, on a réalisé la poche à graisse 21 sur le composant femelle 2.

Le joint 1 ayant des filetages 6, 8 coniques, ceux-ci sont bien entendu frettants avec une interférence radiale déterminée et ces filetages constituent un des moyens permettant d'assembler le composant mâle et le composant femelle à un couple de serrage déterminé.

De plus, de façon en soi connue, le joint 1 est muni au-delà de l'extrémité 22 des filetages de surfaces de butées de vissage respectivement 23 sur le composant mâle et 24 sur le composant femelle et d'un deuxième couple de surfaces de portée respectivement 25 sur le composant mâle et 26 sur le composant femelle.

Les surfaces de butée 23-24 permettent de contrôler le frettage du filetage mâle 8 dans le filetage femelle 6 et d'éviter des vissages trop poussés tout en contrôlant parfaitement la position du composant mâle par rapport au composant femelle. Ainsi le joint peut être facilement vissé selon un couple contrôlé et prédéterminé.

Le deuxième couple de surfaces de portée 25 et 26 assure une étanchéité par contact métal-métal vis-à-vis du fluide circulant à l'intérieur des tubes 4 et 5.

Sur la figure 1 on a représenté l'interférence radiale entre les deux surfaces de portée mâle 25 et femelle 26 par deux traits figurant ces portées avant qu'elles ne soient appliquées l'une sur l'autre.

Les butées 23, 24 et les portées 25, 26 sont ici des surfaces coniques.

A titre d'exemple les butées 23, 24 font par rapport à l'axe X1-X2 un angle de l'ordre de 75° et les portées 25, 26 font par rapport à l'axe X1-X2 un angle de l'ordre de 20°.

L'espace annulaire calibré 20 est rempli de colle, cette colle assurant une liaison mécanique rigide entre la portion mâle 13 et la portion femelle 7 donc entre le composant mâle et le composant femelle, cette liaison mécanique offrant un couple résistant qui représente une fraction du couple de vissage du joint.

Les figures 5 à 8 représentent pendant l'opération de visage du joint 1, un mode d'introduction de la colle dans l'espace annulaire calibré 20.

Selon ce mode, on dépose par exemple au pinceau ou par tout moyen un film de colle, représenté ici volontairement de façon exagérément agrandie sur la surface extérieure 15 de la portion mâle 13. Un film de graisse 28 est en même temps déposé sur le filetage femelle 6 ainsi que sur la butée 24 et la portée 26 pour faciliter de façon connue le vissage. Le composant femelle 2 dont la portion femelle 7 n'est pas enduite de colle est ensuite engagé sur le composant mâle 3 et progresse lors du vissage en hélice, par mouvement relatif entre composants mâle et femelle, dans la direction axiale indiquée par la flèche F figure 7.

De la sorte, et du fait que la portion femelle n'est jamais au cours du vissage en contact avec la portion mâle comme déjà expliqué, lors du vissage représenté figure 7, l'extrémité aval 16 du composant femelle 2 et la surface intérieure 14 de la portion femelle 7 calibrent le film de colle 27, l'excédent de colle 29 étant repoussé vers l'avant de l'extrémité 16.

Simultanément, de la graisse 30 chassée sous pression par les filetages vient se loger dans la poche à graisse 21 et la remplir partiellement, comme représenté symboliquement en traits hachés.

Figure 8 le joint est représenté assemblé, vissé selon un couple déterminé comme sur la figure 1, seules les portions mâle et femelle étant figurées.

On retrouve un excédent de colle 29 en aval du composant femelle et une poche à graisse 21 plus ou moins remplie de graisse 30 sous laquelle se trouve un film de colle 31.

L'espace annulaire calibré est rempli d'un film de colle de hauteur h qui n'est quasiment pas perturbé par la graisse, cette colle étant totalement apte à remplir sa fonction de collage.

Dans le cas de cet exemple on a choisi, sans que cela ait un caractère limitatif, une colle à base de résine epoxy à composants prémélangés et durcissant par chauffage en quelques dizaines de secondes, désignée commercialement sous le nom TOPFIX NA 84 de ATOFINDLEY.

Après avoir effectué le vissage à couple déterminé, on chauffe de façon en soi connue par une bobine à induction encerclante à quelques KHz la zone des composants mâle et femelle correspondant à l'espace annulaire calibré où se trouve la colle.

La durée du chauffage dépend du diamètre et de l'épaisseur des tubes mis en oeuvre. Par exemple pour des tubes de diamètre extérieur 4" ½ et d'épaisseur 6,88 mm le chauffage est effectué pendant environ 30 secondes avec une puissance de 75 KW.

Des essais permettent de régler la durée et la puissance mises en oeuvre dans cette opération pour obtenir de bons résultats de collage.

Ainsi après chauffage la colle assure la liaison mécanique recherchée.

Il se peut que suivant les pressions de contacts mises en oeuvre au niveau des surfaces de portée 17, 18, dans certains cas un très mince film de colle reste entre ces portées. Cela ne nuit en rien à l'efficacité du joint. Dans tous les cas ces surfaces de portées 17, 18 protègent la zone collée 20 des fluides circulant à l'extérieur des tubes.

Pour les applications très sévères, par exemple en eau de mer on peut en plus revêtir de façon en soi connue les tubes 4, 5 et la surface extérieure du composant femelle 2 d'un revêtement protecteur type epoxy plus polypropylène ou d'un autre type.

A titre d'exemple on a réalisé un joint tel que décrit aux figures 1 à 3 et vissé tel que décrit aux figures 5 à 8 dans les conditions ci-dessous :
- diamètre extérieur nominal des tubes 4 : 4" ½
- valeur de h : 0,2 mm
- valeur de H : 1,4 mm
- longueur L : 30 % de la longueur hors tout des composants mâle ou femelle.
- colle TOPFIX NA 84 mise en oeuvre comme expliqué ci-dessus
- couple de vissage : 740 m.kg
- couple résistant dû au collage : 350 m.kg soit 47 % du couple de vissage.

Ainsi on obtient bien un joint pour lequel le couple de survissage ou dévissage est accru de l'ordre de 50 % par rapport à un joint non équipé d'un dispositif contre le survissage ou le dévissage.

On notera de plus que la réalisation par usinage du filetage femelle 6 du joint 1 est facilitée par la poche à graisse 21 qui constitue un espace d'engagement intéressant pour l'outil d'usinage.

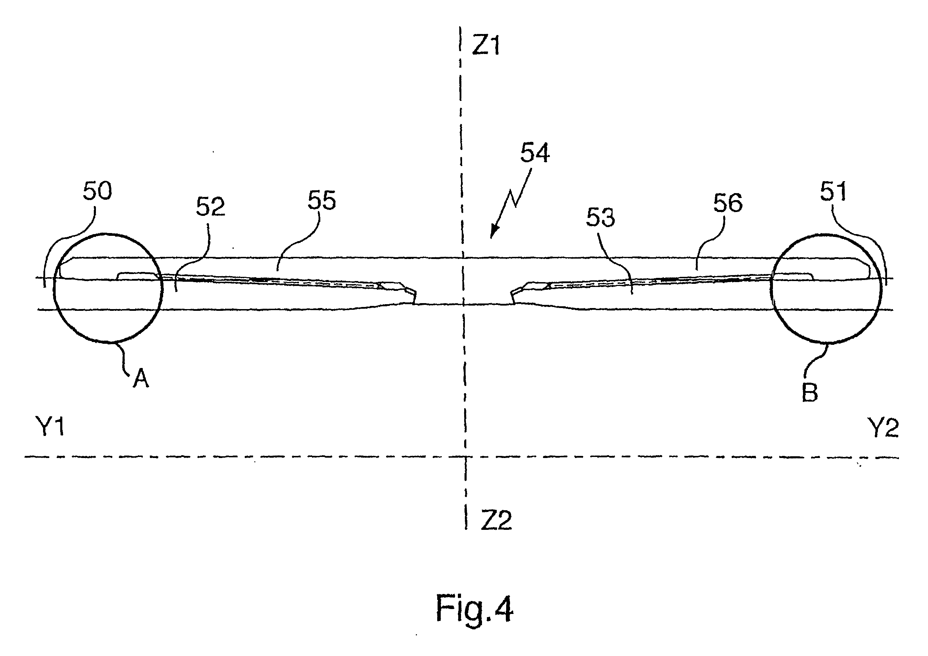

La figure 4 représente une variante manchonnée du joint de la figure 1.

Deux tubes 50, 51 d'axe commun Y1-Y2 portant chacun à leur extrémité un composant mâle 52, 53 sont réunis par un manchon 54 comportant, disposé symétriquement par rapport au plan de trace Z1-Z2 et de chaque coté de ce plan Z1-Z2 un composant femelle 55, 56.

Chaque couple de composants mâle-femelle *52-55,* 53-56 a été réalisé comme décrit antérieurement et illustré par les figures 1 à 3.

Un tel joint réalisé à l'aide du manchon 54 possède deux dispositifs contre le survissage ou le dévissage dans les zones marquées A et B sur la figure 4, zones qui sont réalisées comme il a été expliqué pour le joint de la figure 1.

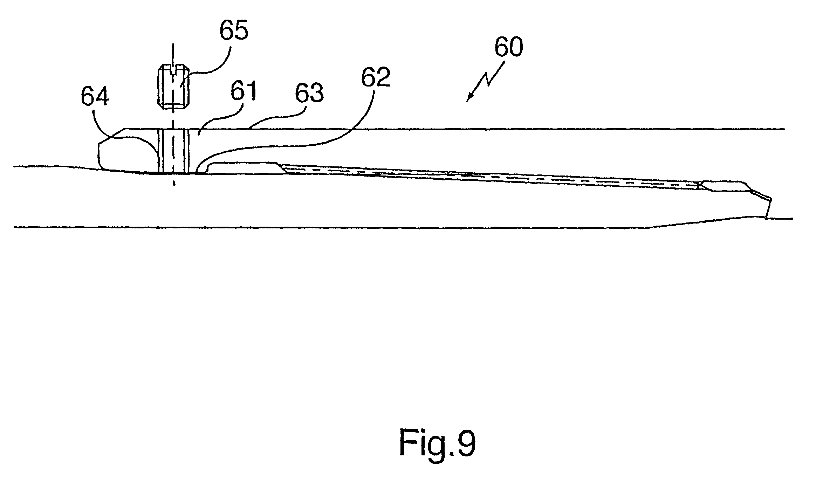

La figure 9 représente une variante du joint de la figure 1 dans lequel la colle au lieu d'être déposée avant vissage comme représenté figure 5 est apportée une fois le joint vissé à couple déterminé.

Ce joint 60 comporte sauf dans la portion femelle 61 les mêmes caractéristiques que le joint 1. La portion femelle 61 comporte ici en plus un trou fileté 64 traversant toute sa paroi et débouchant d'un côté dans l'espace annulaire calibré 62 et de l'autre côté sur la surface extérieure 63 de sa portion femelle. La portion femelle 61 comporte en plus diamétralement opposé au trou 64 mais de plus faible diamètre un deuxième trou fileté non représenté sur la figure servant de canal d'évent.

Ce trou fileté 64 permet d'injecter à la pression voulue dans l'espace annulaire calibré 62 la colle en quantité voulue nécessaire pour remplir cette zone, le trou d'évent permettant d'injecter la colle dans de bonnes conditions.

Après injection on refermera le trou 64 en vissant le bouchon fileté 65 qui est dimensionné de façon à ce qu'il ne dépasse ni dans l'espace annulaire 62 ni sur la surface 63, de la colle étant appliquée sur le filetage du bouchon 65. On refermera de même le deuxième trou avec un bouchon fileté collé servant à assurer une jonction étanche en service.

On procède alors comme pour le joint 1 au chauffage de la colle pour achever la mise en place du dispositif contre le survissage ou dévissage du joint.

Bien entendu le joint selon l'invention peut être démonté. Pour cela, avantageusement, on procédera avant dévissage à la destruction de la colle par chauffage en chauffant par exemple par induction de façon connue à température suffisamment élevée. De la sorte on n'aura pas à exercer un couple de dévissage pour vaincre la résistance due au collage des deux composants. Il sera alors très facile après dévissage de nettoyer les surfaces encollées pour réutiliser le joint si on le désire, ces surfaces encollées n'étant pas du tout détériorées ni marquées mécaniquement. Il n'y aura en particulier nul besoin de réusiner les surfaces de l'espace calibré 20 avant nouvel usage.

Le joint selon la présente invention peut être réalisé selon de nombreuses variantes, les quelques exemples de réalisation présentés n'étant nullement limitatifs.

## Revendications

1. Joint tubulaire fileté (1) du type comportant un composant mâle (3) muni d'un filetage extérieur mâle (8), un composant femelle (2) muni d'un filetage intérieur femelle (6) correspondant au filetage du composant mâle et des moyens permettant d'assembler ces deux composants selon un couple de serrage déterminé, le composant mâle (3) étant vissé à l'intérieur du composant femelle (2) selon un couple déterminé **caractérisé en ce que** le composant femelle (2) comporte en aval (19) de son filetage (6) une portion femelle (7) qui est munie à son extrémité sur sa paroi intérieure d'une surface de portée femelle (17), le composant mâle (3) comportant en amont (12) de son filetage (8) une portion mâle (13) correspondant à la portion femelle (7), cette portion mâle (13) étant munie à son extrémité sur sa paroi extérieure d'une surface de portée mâle (18), la surface de portée mâle (18) et la surface de portée femelle (17) étant en contact d'appui l'une sur l'autre, la surface intérieure (14) de la portion femelle comprise entre l'extrémité du filetage femelle (19) et la surface de portée femelle (17) et la surface extérieure (15) de la portion mâle comprise entre l'extrémité du filetage mâle (12) et la surface de portée mâle (18) ayant des géométries telles qu'elles constituent une zone annulaire (20-21), au moins une partie de la longueur de cette zone mesurée selon l'axe du joint (X1-X2) formant un espace annulaire calibré (20) dans lequel une colle (27) remplissant tout ou partie de cet espace annulaire calibré (20) assure une liaison mécanique entre la portion femelle (7) et la portion mâle (13).

2. Joint selon la revendication 1 **caractérisé en ce que** la surface intérieure (14) de la portion femelle (7) et la surface extérieure (15) de la portion mâle (13) qui constituent l'espace annulaire calibré (20) sont séparées par une distance radiale (h) de l'ordre de quelques dixièmes de mm.

3. Joint selon la revendication 1 ou 2 **caractérisé en ce que** la surface intérieure (14) de la portion femelle (7) et la surface extérieure (15) de la portion mâle (13) qui constituent l'espace annulaire calibré (20) sont des surfaces coniques ou cylindriques ou plus généralement des surfaces de révolution.

4. Joint selon l'une des revendications 1 à 3 **caractérisé en ce que** la zone annulaire située entre l'extrémité des filetages mâle (12) et femelle (19) et les surfaces de portée mâle (18) et femelle (17) comporte une poche à graisse (21) disposée directement en prolongement des filetages.

5. Joint selon la revendication 4 **caractérisé en ce que** l'espace annulaire calibré (20) et la poche à graisse (21) sont réalisés en majeure partie sur la portion femelle (7).

6. Joint selon l'une des revendications 1 à 5 **caractérisé en ce que** la portion mâle (13) ainsi que la portion femelle (7) et en particulier la surface de portée femelle (17) ont une géométrie telle que la surface intérieure de la portion femelle (7) et en particulier la surface de portée femelle (17) ne soient pas en contact avec la surface extérieure de la portion mâle pendant la phase de vissage du joint, un intervalle radial étant maintenu entre ces deux surfaces, la surface de portée femelle venant en contact d'appui sur la surface de portée mâle en fin de vissage du joint.

7. Joint selon l'une des revendications 1 à 6 **caractérisé en ce que** le diamètre de la surface extérieure de la portion mâle (13) entre le filetage mâle (12) et la surface de portée mâle (18) est inférieur au diamètre de la partie courante du tube (5) sur lequel est réalisé le composant mâle (3).

8. Joint selon l'une des revendications 1 à 7 **caractérisé en ce que** les surfaces de portée mâle (18) et femelle (17) sont des surfaces en tronc de cône.

9. Joint selon l'une des revendications 1 à 8 **caractérisé en ce que** la colle utilisée (27) est une colle à prise commandée.

10. Joint selon l'une des revendications 1 à 8 **caractérisé en ce que** la colle (27) est une colle à base de résine epoxy.

11. Joint selon l'une des revendications 6 à 10 **caractérisé en ce que** la colle (27) est déposée sur la surface extérieure de la portion mâle avant vissage.

12. Joint selon la revendication 11 **caractérisé en ce que** la colle (27) est calibrée en un film de colle par le déplacement de la portion femelle (7) par rapport à la portion mâle (13) en cours de vissage du joint.

13. Joint selon l'une des revendications 1 à 10 **caractérisé en ce que** la colle est injectée après vissage dans l'espace annulaire (20) calibré par l'intermédiaire d'un trou (64) traversant la portion femelle (61) au niveau de l'espace annulaire calibré (20), trou (64) qui est de préférence muni de moyens de fermeture (65).

14. Joint selon la revendication 13 **caractérisé en ce qu'**il comporte également un canal d'évent.

15. Joint selon l'une des revendications 1 à 14 **caractérisé en ce qu'**il est du type intégral, le composant mâle (3) et le composant femelle (2) étant réalisés en extrémité des tubes (4, 5) à réunir par le joint (1).

16. Joint selon l'une des revendications 1 à 14 **caractérisé en ce qu'**il est du type manchonné, le composant femelle (55) étant réalisé à l'extrémité d'un côté d'un manchon (54), le composant mâle (52) étant réalisé sur un tube, une disposition identique étant réalisée de l'autre côté du manchon (54) avec un autre composant femelle (56) et un autre composant mâle (53).

17. Joint selon l'une des revendications 1 à 16 **caractérisé en ce que** les filetages (6, 8) sont des filetages coniques.

18. Joint selon l'une des revendications 1 à 16 **caractérisé en ce que** les filetages sont des filetages cylindriques.

19. Joint selon l'une des revendications 1 à 16 **caractérisé en ce que** les filetages sont des filetages à deux étages.

20. Joint selon l'une des revendications 1 à 19 **caractérisé en ce que** le composant mâle et le composant femelle comportent un couple de surface de butée de vissage (23, 24).

21. Joint selon l'une des revendications 1 à 20 **caractérisé en ce que** le composant mâle et le composant femelle comportent un couple de surface de portée d'étanchéité (25, 26) métal-métal autre que les surfaces de portée (17, 18) de la portion femelle (7) et de la portion mâle (13).

22. Joint selon l'une des revendications 1 à 16 **caractérisé en ce que** les moyens permettant d'assembler les deux composants selon un couple déterminé sont des moyens constitués par les filetages (6, 8) ou des moyens indépendants des filetages.

## Patentansprüche

1. Gewindete Rohrverbindung (1) mit einem Einsteckbauteil (3) mit einem Außengewinde (8), einem Aufnahmebauteil (2) mit einem Innengewinde (6), das dem Gewinde des Einsteckbauteils entspricht, und mit Mitteln, die es erlauben, diese beiden Bauteile gemäß einem bestimmten Anziehdrehmoment zu verbinden, wobei das Einsteckbauteil (3) mit einem bestimmten Moment in das Aufnahmebauteil (2) geschraubt wird, **dadurch gekennzeichnet, dass** das Aufnahmebauteil (2) stromabwärts (19) seines Gewindes (6) einen Aufnahmeabschnitt (7) aufweist, der an seinem Ende an seiner Innenwand mit einer Aufnahmelagerfläche (17) versehen ist, wobei das Einsteckbauteil (3) stromaufwärts (12) seines Gewindes (8) einen Einsteckabschnitt (13) aufweist, der dem Aufnahmeabschnitt (7) entspricht, wobei der Einsteckabschnitt (13) an seinem Ende an seiner Außenwand mit einer Einstecklagerfläche (18) versehen ist und die Einstecklagerfläche (18) und die Aufnahmelagerfläche (17) in Anlagekontakt stehen, wobei die Innenfläche (14) des Aufnahmeabschnitts zwischen dem Ende des Innengewindes (19) und der Aufnahmelagerfläche (17) und die Außenfläche (15) des Einsteckabschnitts zwischen dem Ende des Außengewindes (12) und der Einstecklagerfläche (18) derartig geformt sind, dass sie einen ringförmigen Bereich (20-21) bilden, wobei mindestens ein Teil der Länge dieses gemäß der Verbindungsachse (X1-X2) gemessenen Bereichs einen kalibrierten ringförmigen Raum (20) bildet, in dem ein Klebstoff (27), der diesen kalibrierten ringförmigen Raum (20) vollständig oder teilweise ausfüllt, eine mechanische Verbindung zwischen dem Aufnahmeabschnitt (7) und dem Einsteckabschnitt (13) sicherstellt.

2. Verbindung nach Anspruch 1, **dadurch gekennzeichnet, dass** die Innenfläche (14) des Aufnahmeabschnitts (7) und die Außenfläche (15) des Einsteckabschnitts (13), die den kalibrierten ringförmigen Raum (20) bilden, durch einen radialen Abstand (h) in der Größenordnung von einigen Zehntel Millimetern voneinander getrennt sind.

3. Verbindung nach Anspruch 1 oder 2, **dadurch gekennzeichnet, dass** die Innenfläche (14) des Aufnahmeabschnitts (7) und die Außenfläche (15) des Einsteckabschnitts (13), die den kalibrierten ringförmigen Raum (20) bilden, konische oder zylindrische oder allgemein Rotationsflächen sind.

4. Verbindung nach einem der Ansprüche 1 bis 3, **dadurch gekennzeichnet, dass** der ringförmige Bereich zwischen dem Ende des Außengewindes (12) und des Innengewindes (19) und der Einsteck- und Aufnahmelagerfläche (18 bzw. 17) eine Fetttasche (21) aufweist, die in direkter Verlängerung der Gewinde angeordnet ist.

5. Verbindung nach Anspruch 4, **dadurch gekennzeichnet, dass** der kalibrierte ringförmige Raum (20) und die Fetttasche (21) zum größten Teil am Aufnahmeabschnitt (7) ausgebildet sind.

6. Verbindung nach einem der Ansprüche 1 bis 5, **dadurch gekennzeichnet, dass** der Einsteckabschnitt (13) und der Aufnahmeabschnitt (7) und insbesondere die Aufnahmelagerfläche (17) so geformt sind, dass die Innenfläche des Aufnahmeabschnitts (7) und insbesondere die Fläche des Aufnahmeabschnitts (17) während der Phase des Festschraubens der Verbindung nicht in Kontakt mit der Außenfläche des Einsteckabschnitts stehen, da zwischen den beiden Flächen ein radialer Abstand aufrechterhalten wird, während die Aufnahmelagerfläche am Ende des Festschraubens der Verbindung in Anlagekontakt mit der Einstecklagerfläche kommt.

7. Verbindung nach einem der Ansprüche 1 bis 6, **dadurch gekennzeichnet, dass** der Durchmesser der Außenfläche des Einsteckabschnitts (13) zwischen dem Außengewinde (12) und der Einstecklagerfläche (18) kleiner ist als der Durchmesser des laufenden Abschnitts des Rohrs (5), an dem das Einsteckbauteil (3) ausgebildet ist.

8. Verbindung nach einem der Ansprüche 1 bis 7, **dadurch gekennzeichnet, dass** die Einsteck- und Aufnahmelagerflächen (18 bzw. 17) kegelstumpfförmige Flächen sind.

9. Verbindung nach einem der Ansprüche 1 bis 8, **dadurch gekennzeichnet, dass** der verwendete Klebstoff (27) ein Klebstoff mit gesteuerter Bindung ist.

10. Verbindung nach einem der Ansprüche 1 bis 8, **dadurch gekennzeichnet, dass** der Klebstoff (27) ein Klebstoff auf der Basis von Epoxyharz ist.

11. Verbindung nach einem der Ansprüche 6 bis 10, **dadurch gekennzeichnet, dass** der Klebstoff (27) vor dem Festschrauben an der Außenfläche des Einsteckabschnitts aufgetragen wird.

12. Verbindung nach Anspruch 11, **dadurch gekennzeichnet, dass** der Klebstoff (27 durch Verschieben des Aufnahmeabschnitts (7) gegenüber dem Einsteckabschnitt (13) beim Festschrauben der Verbindung in einen Klebefilm kalibriert wird.

13. Verbindung nach einem der Ansprüche 1 bis 10, **dadurch gekennzeichnet, dass** der Klebstoff nach dem Festschrauben durch ein Loch (64) im Aufnahmeabschnitt (61) auf der Höhe des kalibrierten ringförmigen Raums (20) in den kalibrierten ringförmigen Raum (20) gespritzt wird, wobei das Loch (64) vorzugsweise mit Verschlussmitteln (65) versehen ist.

14. Verbindung nach Anspruch 13, **dadurch gekennzeichnet, dass** sie auch einen Entlüftungskanal aufweist.

15. Verbindung nach einem der Ansprüche 1 bis 14, **dadurch gekennzeichnet, dass** sie eine Integralverbindung ist, wobei das Einsteckbauteil (3) und das Aufnahmebauteil (2) am Ende der Rohre (4, 5) ausgebildet sind, die durch die Verbindung (1) verbunden werden sollen.

16. Verbindung nach einem der Ansprüche 1 bis 14, **dadurch gekennzeichnet, dass** sie eine Muffenverbindung ist, wobei das Aufnahmebauteil (55) am Ende einer Seite einer Muffe (54) und das Einsteckbauteil (52) an einem Rohr ausgebildet sind, wobei eine identische Anordnung auf der anderen Seite der Muffe (54) mit einem anderen Aufnahmebauteil (56) und einem anderen Einsteckbauteil (53) vorgesehen ist.

17. Verbindung nach einem der Ansprüche 1 bis 16, **dadurch gekennzeichnet, dass** die Gewinde (6, 8) konische Gewinde sind.

18. Verbindung nach einem der Ansprüche 1 bis 16, **dadurch gekennzeichnet, dass** die Gewinde (6, 8) zylindrische Gewinde sind.

19. Verbindung nach einem der Ansprüche 1 bis 16, **dadurch gekennzeichnet, dass** die Gewinde (6, 8) zweistufige Gewinde sind.

20. Verbindung nach einem der Ansprüche 1 bis 19, **dadurch gekennzeichnet, dass** das Einsteckbauteil und das Aufnahmebauteil ein Paar Schraubanschlagflächen (23, 24) aufweisen.

21. Verbindung nach einem der Ansprüche 1 bis 20, **dadurch gekennzeichnet, dass** das Einsteckbauteil und das Aufnahmebauteil außer den Lagerflächen (17, 18) des Aufnahmeabschnitts (7) und des Einsteckabschnitts (13) ein Paar Dichtungslagerflächen (25, 26) Metall-Metall aufweisen.

22. Verbindung nach einem der Ansprüche 1 bis 16, **dadurch gekennzeichnet, dass** die Mittel, die es erlauben, die beiden Bauteile gemäß einem bestimmten Moment zusammenzufügen, von den Gewinden (6, 8) gebildete oder von den Gewinden unabhängige Mittel sind.

## Claims

1. Tubular threaded joint (1) of the type which includes a male component (3) provided with an external male thread (8), a female component (2) provided with a female internal thread (6) corresponding to the thread of the male component and means which allow these two components to be assembled with a predetermined amount of torque, the male component (3) being screwed inside the female component (2) at a predetermined torque, **characterized in that** the female component (2) will include downstream (19) from its thread (6) a female portion (7) which is provided at its end on its internal wall with a female bearing surface (17), the male component (3) including upstream (12) from its thread (8) a male portion (13) corresponding to the female portion (7), this male portion (13) being provided at its end on its external wall with a male bearing surface (18), the male bearing surface (18) and the female bearing surface (17) being in supporting contact on one another, the internal surface (14) of the female portion included between the end of the female threading (19) and the female bearing surface (17) and the external surface (15) of the male portion included between the end of the male threaded section (12) and the male bearing surface (18) having geometries such that they constitute an annular zone (20-21), at least one part of the measured length of said zone along the axis of the joint (X1-X2) forming a calibrated annular space (20) in which an adhesive (27) which fills all or part of this annular calibrated space (20) ensures mechanical connection between the female portion (7) and the male portion (13).

2. Joint according to claim 1 **characterized in that** the internal surface (14) of the female portion (7) and the external surface (15) of the male portion (13) which comprise the annular calibrated space (20) are separated by a radial distance (h) on the order of a few tenths of millimeters.

3. Joint according to claim 1 or 2 **characterized in that** the internal surface (14) of the female portion (7) and the external surface (15) of the male portion (13) which constitute the annular calibrated space (20) are conical or cylindrical surfaces or more generally surfaces of revolution.

4. Joint according to one of the claims 1 to 3 **characterized in that** the annular zone located between the end of the male (12) and female (19) threads and the male (18) and female (17) bearing surfaces includes a grease pocket (21) arranged directly in an extension of the threads.

5. Joint according to claim 4 **characterized in that** the annular calibrated space (20) and the grease pocket (21) are formed in major part on the female portion (7).

6. Joint according to one of the claims 1 to 5 **characterized in that** the male portion (13) as well as the female portion (7) and in particular the female bearing surface (17) have a geometry such that the internal surface of the female portion (7) and in particular the female bearing surface (17) are not in contact with the external surface of the male portion during the screwing phase of the joint, a radial interval being maintained between these two surfaces, the female bearing surface coming into supporting contact on the male bearing surface at the end of screwing of the joint.

7. Joint according to one of the claims 1 to 6 **characterized in that** the diameter of the external surface of the male portion (13) between the male thread (12) and the male bearing surface (18) is less than the diameter of the common part of the pipe (5) on which the male component (3) is formed.

8. Joint according to one of the claims 1 to 7 **characterized in that** the male (18) and female (17) bearing surfaces are surfaces in the shape of a truncated cone.

9. Joint according to one of the claims 1 to 8 **characterized in that** the adhesive used (27) is an adhesive with controlled setting.

10. Joint according to one of the claims 1 to 8 **characterized in that** the adhesive (27) is an epoxy resin based adhesive.

11. Joint according to one of the claims 6 to 10 **characterized in that** the adhesive (27) is deposited on the external surface of the male portion before screwing.

12. Joint according to claim 11 **characterized in that** the adhesive (27) is calibrated in an adhesive film by the displacement of the female portion (7) with respect to the male portion (13) during screwing of the joint.

13. Joint according to one of the claims 1 to 10 **characterized in that** the adhesive is injected after screwing into the calibrated annular space (20) by the intermediary of a hole (64) which passes through the female portion (61) at the level of the annular calibrated space (20), which hole (64) is preferably provided with closure means (65).

14. Joint according to claim 13 **characterized in that** it also includes a vent channel.

15. Joint according to one of the claims 1 to 14 **characterized in that** it is of the integral type, the male component (3) and the female component (2) being formed at the end of the pipes (4, 5) that are to be combined by the joint ( 1).

16. Joint according to one of the claims 1 to 14 **characterized in that** it is of the sleeve coupling type, the female component (55) being formed at the end of one side of a sleeve (54), the male component (52) being formed on a pipe, an identical arrangement being formed on the other side of the sleeve (54) with another female component (56) and another male component (53).

17. Joint according to one of the claims 1 to 16 **characterized in that** the threads (6, 8) are tapered threads.

18. Joint according to one of the claims 1 to 16 **characterized in that** the threads are cylindrical threads.

19. Joint according to one of the claims 1 to 16 **characterized in that** the threads are two-stage threads.

20. Joints according to one of the claims 1 to 19 **characterized in that** the male component and the female component include a screw stop surface pair (23, 24).

21. Joint according to one of the claims 1 to 20 **characterized in that** the male component and the female component include a metal-to-metal tight bearing surface pair (25, 26) other than the bearing surfaces (17, 18) of the female portion (7) and the male portion (13).

22. Joint according to one of the claims 1 to 16 **characterized in that** the means which allow one to assemble the two components with predetermined torque are means comprised of the threads (6, 8) or means independent of the threads.
